**Europäisches Patentamt**

(19) **European Patent Office**

**Office européen des brevets**

(11) Publication number: **0 159 339**
**B1**

(12) **EUROPEAN PATENT SPECIFICATION**

(45) Date of publication of patent specification: **17.11.88**

(51) Int. Cl.⁴: **F 02 B 75/06, F 16 F 15/30**

(21) Application number: **84903645.4**

(22) Date of filing: **26.09.84**

(86) International application number:
**PCT/GB84/00327**

(87) International publication number:
**WO 85/01547 11.04.85 Gazette 85/09**

(80) Consolidated with 84306530.1/0140576
(European application No./publication No.) by
decision dated 06.08.86.

(54) **FLYWHEEL FOR INTERNAL COMBUSTION ENGINE.**

(30) Priority: **30.09.83 GB 8326262**
**08.02.84 GB 8403303**

(43) Date of publication of application:
**30.10.85 Bulletin 85/44**

(45) Publication of the grant of the patent:
**17.11.88 Bulletin 88/46**

(84) Designated Contracting States:
**AT BE CH DE FR GB IT LI LU NL SE**

(56) References cited:
**US-A-2 719 438**
**US-A-2 835 141**
**US-A-3 299 735**

(73) Proprietor: **LuK Lamellen und Kupplungsbau**
**GmbH**
**Industriestrasse 3**
**D-7580 Bühl/Baden (DE)**

(72) Inventor: **KETTELL, John**
**5 Marston Close Dronfield**
**Woodhouse Sheffield S18 5RX (GB)**

Courier Press, Leamington Spa, England.

**Description**

This invention relates to a flywheel for an internal combustion engine, adapted to be secured to an output shaft of the engine (usually the crank-shaft thereof) and affording a surface for engagement with a friction element of a friction clutch (the clutch being secured to the flywheel in use), and also affording peripheral gear teeth for engagement by the pinion of a starter motor.

The most common form of flywheel presently used for internal combustion engines is an iron casting which has been finished by machining operations. The peripheral gear teeth are provided on a separate ring gear secured to the flywheel, usually by being shrunk onto it. Cast iron, if of the correct grade, has excellent frictional properties and resists wear of the clutch which inevitably occurs in service. However, if the friction surface of the flywheel is damaged, for example if the friction element (driven plate) of the clutch wears to an extent that rivets securing friction linings thereto contact the flywheel, it is then necessary to replace the whole flywheel which is expensive. It is possible to fit a new ring gear if the latter becomes damaged but this also is a difficult and expensive operation. A further problem encountered with such conventional flywheels is that of achieving adequate strength in terms of resistance to breakage under centrifugal force at high engine speeds. This problem can be overcome by use of a cast iron material of a higher specification, but this is expensive.

Flywheel constructions of considerable complexity have been proposed, incorporating numbers of parts assembled together. However, no proposal has been aimed at overcoming the problems above set forth.

US-A-2835141 discloses a flywheel structure made of a number of elements including a sheet metal plate bolted to an engine crankshaft, and having bolted to it a clutch back plate. Also bolted to the flywheel is a torque convertor, the clutch backplate being part of a friction clutch for locking out the torque convertor. Hence the flywheel construction described does not address the problems above and hereafter referred to in the context of a flywheel for use with a conventional friction clutch.

It is the object of the present invention to provide a flywheel in which these disadvantages are overcome or reduced.

According to the invention, we provide a flywheel for an internal combustion engine, for connection to an output shaft of the engine and to a friction clutch and comprising peripheral starter gear teeth;

characterised by a first element of sheet metal, having said peripheral gear teeth formed thereon, and having a portion adapted to be secured to said output shaft of the engine, and a second element of affording a surface for engagement by a friction element of said friction clutch, said first and second elements being generally in the form of discs and having face-to-face engagement over an area constituting at least the major portion of the surface area of said second element which faces the first element.

Preferably said area of engagement is at least 80% of said facing area, of the second element and is planar.

Preferably said first element is a sheet steel pressing, and said gear teeth, integral therewith, are hardened, e.g. by induction hardening. Said second element is preferably of cast iron, since this affords desirable frictional properties as referred to above.

The second element may be secured to the first element in use by means, e.g. bolts, which also holds the clutch to the flywheel. Then, if the clutch is removed from the flywheel the two elements of the flywheel can relatively easily be separated. Dowel pins or the like may be provided to hold the second and first elements of the flywheel together for shipping and handling purposes and to ensure correct alignment of the elements with themselves and with a clutch secured thereto.

The advantage of a flywheel according to the invention is that one element thereof can be replaced without replacement of the other element. If the friction surface is worn, the second element only of the flywheel need be replaced, which is much more economical than replacement of the whole flywheel as required hitherto. If the starter gear teeth are damaged, replacement of the first element of the flywheel is much more convenient than having to fit a new ring gear as has been required hitherto, and less expensive than replacement of the entire flywheel.

The large area of face-to-face contact between said elements, which area preferably is planar, ensures good thermal conduction between the elements, dimensional stability, and strength. The cast iron element is supported by the sheet metal element, and so is resistant to failure under centrifugal force. With regard to the thermal properties of the flywheel, it has been found that good thermal conductivity between the elements is of importance in avoiding "hot spots" at the friction surface and ensuring the heat sink effect of the flywheel is adequate to meet service conditions.

The elements of the flywheel may be balanced individually, or as a sub-assembly, depending on requirements for servicing.

The invention will now be described by way of example with reference to the accompanying drawings, of which:-

Figure 1 is a section through a flywheel according to the invention; and

Figure 2 is a section through a further embodiment of flywheel according to the invention.

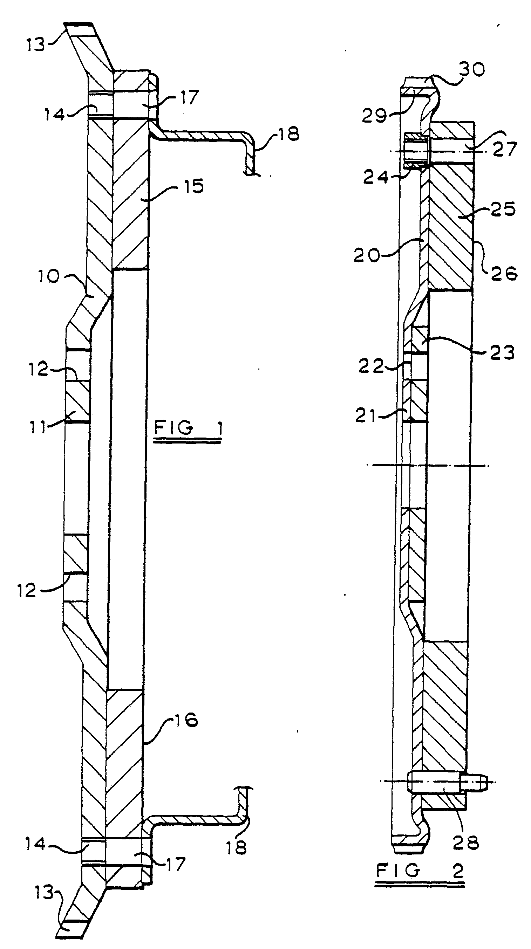

The flywheel illustrated in Figure 1 of the drawings comprises two elements, the first of which is a sheet steel pressing 10. The element 10 has a central region 11 provided with circumferentially spaced apertures 12 for receiving bolts to secure it to the crank shaft or other output shaft of an internal combustion engine. At its external periphery, the element 10 is provided, e.g. by a conventional gear cutting process, with gear teeth 13 for engagement by a starter motor pinion. The gear teeth 13 are hardened, e.g. by induction hardening, and a suitable grade of sheet steel must be employed for the element 10 to enable this to be done.

The second element of the flywheel comprises an annular component 15 of cast iron, affording a friction surface 16 for engaging one side of the driven plate of a clutch to be secured to the flywheel. The clutch would be secured to the flywheel by a plurality of axially extending bolts provided at circumferentially spaced positions around the periphery of the cover of the assembly, which bolts pass through apertures 17 in the second element 15 of the flywheel and enter screw-threaded apertures 14 in the first element 10 of the flywheel. The cover member of a clutch, in which would be mounted the pressure plate and a spring means of the clutch and within which the driven plate would be disposed, is indicated at 18. Thus when installed the first and second elements of the flywheel are rigidly secured to one another. There may be provided means such as dowels to hold the two elements of the flywheel in assembled relation with one another until the flywheel is installed.

It will be noted that the elements of the flywheel lie in contacting face-to-face relationship, in a radial plane, over substantially the entire facing area of the second element 15. This ensures dimensional stability, strength, and good thermal conductivity between the flywheel elements. If there were not such contact over the major portion of the area of element 15, e.g. approximately 80% of such area, there may arise local thermal problems since the element 15 alone may not provide an adequate heat sink.

Referring now to Figure 2 of the drawings, the embodiment of flywheel there illustrated comprises a first element 20 which is a pressing of sheet steel. This element has a central region 21 provided with circumferentially spaced apertures 22 for receiving bolts to secure it to an engine crankshaft. An apertures ring 23 reinforces the part 21 of the element 20.

The second element of the flywheel comprises an annular cast iron component 25, affording a surface 26 for engagement with a clutch driven plate. The element 25 has circumferentially spaced apertures 27 for receiving bolts by which a clutch cover assembly, not shown, is secured to the flywheel, such bolts extending in to captive nuts 24 fixed to the element 20.

The periphery of the element 20 has an axially extending portion 29 provided with gear teeth 30 for engagement by a starter motor pinion. Such gear teeth may be formed by a rolling process, in which the material is deformed in successive passes of an appropriately shaped tool to raise the teeth 30 thereof without metal removal. Such a forming process is well known and enables relatively thin material to be used for the element 20. The teeth 30 are hardened as in the embodiment of Figure 1.

It will be noted that the flywheel of Figure 2, as for that shown in Figure 1, has a large planar area of contact between its first and second elements (20, 25).

## Claims

1. A flywheel for an internal combustion engine, for connection to an output shaft of the engine and to a friction clutch and comprising peripheral starter gear teeth (13, 30); characterised by a first element (10, 20) of sheet metal, having said peripheral gear teeth (13, 30) formed thereon, and having a portion (11, 21) adapted to be secured to said output shaft of the engine, and a second element (15, 25) affording a surface (16, 26) for engagement by a friction element of said friction clutch, said first and second elements (10 and 15, 20 and 25) being generally in the form of discs and having face-to-face engagement over an area constituting at least the major portion of the surface area of said second element (15, 25) which faces the first element (10, 20).

2. A flywheel according to Claim 1 wherein said area of engagement is at least 80% of said facing area of said second element (15, 25).

3. A flywheel according to Claim 1 or Claim 2 wherein said area of engagement is planar.

4. A flywheel according to any one of the preceding claims wherein said second element (15, 25) is of cast iron.

5. A flywheel according to any one of the preceding claims wherein said first element (10, 20) is a sheet steel pressing, and said gear teeth (13, 30) are hardened.

6. A flywheel according to Claim 5 wherein said teeth (30) have been formed on said first element (20) by a rolling process.

7. A flywheel according to any one of the preceding claims wherein said first element (10, 20) has means (14, 24) adapted to receive fasteners for holding a clutch cover assembly (18) to the flywheel, such fasteners also holding said first and second elements (10, 15, 20, 25) together.

## Patentansprüche

1. Schwungrad für einen Brennkraftmotor zur Verbindung mit einer Abtriebswelle eines Motors und mit einer Reibungskupplung, mit einer Umfangsanlasserverzahnung (13, 30), dadurch gekennzeichnet, daß ein aus Blech hergestelltes erstes Element (10, 20) mit daran angeformter Umfangsverzahnung (13, 30) und mit einem an der Abtriebswelle des Motors zu befestigenden Abschnitt (11, 21) und ein zweites Element (15, 25) vorgesehen sind, das eine Fläche (16, 26) aufweist, mit der ein Reibungselement der Reibungskupplung zusammenwirkt, wobei die ersten und zweiten Elemente (10 und 15, 20 und 25) im wesentlichen scheibenförmig ausgebildet sind und sich in Flächenaulage über einen Bereich befinden, der wenigstens den größten Teil des Oberflächenbereichs des zweiten Elementes (15, 25), der dem ersten Element (10, 20) zugewandt ist, einnimmt.

2. Schwungrad nach Anspruch 1, dadurch gekennzeichnet, daß die Angriffsfläche wenigstens 80% des Oberflächenbereichs des zweiten Elementes (15, 25) einnimmt.

3. Schwungrad nach Anspruch 1 oder 2, dadurch gekennzeichnet, daß die Angriffsfläche eben ausgebildet ist.

4. Schwungrad nach einem der vorhergehenden Ansprüche, dadurch gekennzeichnet, daß das zweite Element (15, 25) aus Gußeisen besteht.

5. Schwungrad nach einem der vorhergehenden Ansprüche, dadurch gekennzeichnet, daß das erste Element (10, 20) ein Stahlblech Formteil ist und daß die Verzahnung (13, 30) gehärtet ist.

6. Schwungrad nach Anspruch 5, dadurch gekennzeichnet, daß die Verzahnung (30) in das erste Element (20) durch einen Rollvorgang eingeformt ist.

7. Schwungrad nach einem der vorhergehenden Ansprüche, dadurch gekennzeichnet, daß das erste Element (10, 20) Mittel (14, 24) zur Aufnahme von Verbindungsmitteln zur Befestigung einer Kupplungsdeckelanordnung (18) an dem Schwungrad aufweist, wobei diese Verbindungsmittel außerdem die ersten und zweiten Elemente (10, 15, 20, 25) zusammenhalten.

**Revendications**

1. Volant d'inertie pour un moteur à combustion interne, destiné à être fixé à l'arbre de sortie du moteur et à un embrayage à friction, et qui comprend des dents d'engrenage périphériques (13, 30) formant une couronne de démarreur; caractérisé par un premier élément (10, 20) en tôle, sur lequel sont formées lesdites dents d'engrenage périphériques (13, 30) et possédant une partie (11, 21) adaptée pour être fixée audit arbre de sortie du moteur, et un deuxième élément (15, 25) qui présente une surface (16, 26) destinée à être attaquée par un élément de friction dudit embrayage à friction, lesdits premier et deuxième éléments (10 et 15, 20 et 25) présentant la forme générale de disques et étant en appui face contre face sur une aire qui représente au moins la majeure partie de l'aire de la surface dudit deuxième élément (15, 25) qui regarde le premier élément (10, 20).

2. Volant d'inertie selon la revendication 1, dans lequel ladite aire d'appui représente au moins 80% de ladite aire du deuxième élément (15, 25) qui regarde le premier élément.

3. Volant d'inertie selon la revendication 1 ou la revendication 2, dans lequel ladite aire d'appui est plane.

4. Volant d'inertie selon l'une quelconque des revendications précédentes, dans lequel ledit deuxième élément (15, 25) est en fonte.

5. Volant d'inertie selon l'une quelconque des revendications précédentes, dans lequel ledit premier élément (10, 20) est un élément embouti en tôle d'acier et lesdites dents d'engrenage (13, 30) sont trempées.

6. Volant d'inertie selon la revendication 5, dans lequel lesdites dents (30) ont été formés sur ledit premier élément (20) par une opération de roulage.

7. Volant d'inertie selon l'une quelconque des revendications précédentes, dans lequel ledit premier élément (10, 20) possède des moyens (14, 24) adaptés pour recevoir des organes de fixation destinés à maintenir un ensemble couvercle d'embrayage (18) fixé au volant, lesdits organes de fixation maintenant également lesdits premier et deuxième éléments (10, 15, 20, 25) assemblés l'un à l'autre.

FIG 1

FIG 2